# EUROPÄISCHE PATENTSCHRIFT

(11) **EP 1 144 727 B1**
(45) Veröffentlichungstag und Bekanntmachung des Hinweises auf die Patenterteilung: **02.10.2002**
(21) Anmeldenummer: 99967884.0
(22) Anmeldetag: 17.12.1999
(51) Int. Cl.: C23C 30/00, C22C 45/00, C22C 45/10, C22C 45/08

(54) **VERSCHLEISSSCHUTZSCHICHT**
ANTIABRASION COATING
COUCHE ANTI-USURE

(30) Priorität: 22.12.1998 DE 19859477
(43) Veröffentlichungstag der Anmeldung: 17.10.2001
(73) Patentinhaber: MTU Aero Engines GmbH, 80995 München (DE)
(72) Erfinder: SAGEL, Alexander, D-89075 Ulm (DE); KOPPERGER, Bertram, D-85241 Hebertshausen (DE); BAYER, Erwin, D-85221 Dachau (DE); SMARSLY, Wilfried, D-81669 München (DE)
(74) Vertreter: Zacharias, Frank L.
(86) Internationale Anmeldenummer: DE9904017
(87) Internationale Veröffentlichungsnummer: WO00037713

(56) Entgegenhaltungen:
- EP-A- 0 354 391
- EP-A- 0 576 366
- WO-A-92/13111
- DE-A- 4 216 150
- US-A- 5 389 226
- PATENT ABSTRACTS OF JAPAN vol. 1998, no. 09, 31. Juli 1998 (1998-07-31) & JP 10 096077 A (INOUE AKIHISA;YKK CORP), 14. April 1998 (1998-04-14)
- CHEMICAL ABSTRACTS, vol. 123, no. 6, 7. August 1995 (1995-08-07) Columbus, Ohio, US; abstract no. 62895, WANG, MAOCEI ET AL: "Laser coating with amorphous PdCuSi alloy" XP002136889 & ZHONGGUO JIGUANG (1995), A22(3), 228-32 ,1995,
- CHEMICAL ABSTRACTS, vol. 113, no. 6, 6. August 1990 (1990-08-06) Columbus, Ohio, US; abstract no. 50666, KOLAWA, E. ET AL: "Amorphous tantalum-silicide nitride thin-film alloys as diffusion barrier aluminum/silicon metalizations" XP002136890 & J. VAC. SCI. TECHNOL., A (1990), 8(3, PT. 2), 3006-10 ,1990,
- DATABASE WPI Section Ch, Week 198941 Derwent Publications Ltd., London, GB; Class M13, AN 1989-293337 XP002136891 & DD 267 742 A (VEB HARTMET IMMELB), 10. Mai 1989 (1989-05-10)

## Beschreibung

Die Erfindung betrifft eine Verschleißschutzschicht, die auf eine zu schützende Oberfläche eines mechanisch und/oder strömungsmechanisch beanspruchten Bauteils aufgebracht ist und im wesentlichen aus amorphen oder amorph-nanokristallinen Metallen besteht.

Durch Reibung mechanisch beanspruchte oder umströmte Bauteile unterliegen im allgemeinen abrasivem oder erosivem Verschleiß. Im Bereich der Verbrennungskraftmaschinen tritt dieser z.B. bei Kolbenmotoren an Ventilen, Kolben od.dgl. auf. Im Bereich der Gasturbinen sind die umströmten Bauteile darüber hinaus gegen Erosion und Korrosion zu schützen.

Aus der Zeitschrift Metall, 36. Jahrgang (August 1982), Seiten 841 bis 853 ist bekannt, amorphe Metallbänder aufgrund ihrer guten Korrosionsbeständigkeit und ihrer hohen Härte und Abriebfestigkeit auf Turbinenschaufeln von Flugzeugtriebwerken aufzuschweißen, wobei dazu amorphe Metalle auf Eisenbasis und die Herstellung von Metallbänder mittels kontinuierlicher Abschreckmethoden vorgeschlagen werden.

Die DE 38 00 454 A1 offenbart ein Verfahren zur Herstellung von Korrosions- und Verschleißschutzschichten und Formkörpern aus metallischen, amorphen Werkstoffen, wobei aus metallischen Legierungen zunächst ein pulvermetallurgisch weiterverarbeitbares, amorphes Pulver hergestellt und dieses anschließend z.B. durch Plasmaspritzen auf das Substrat aufgebracht wird.

Aus der DE 38 14 444 A1 sind hochkorrosionsbeständige, amorphe Legierungen bekannt, die im wesentlichen aus wenigstens einem Element aus der Gruppe von Ta und Nb bestehen und zusätzlich wenigstens ein Element aus der Gruppe Ti und Zr aufweisen können, wobei stets Cu Bestandteil ist. Aus diesen Elementen werden zahlreiche Legierungen auf Cu-Basis offenbart, die durch Spritzabscheiden auf ein Substrat aufgebracht werden.

Die DE 42 16 150 A1 offenbart hochkorrosionsfeste, amorphe Legierungen auf der Basis von Ti oder Zr und Cr, die eine hohe Korrosions- und Verschleißfestigkeit aufweisen sollen und durch Sputtering oder Zerstäuben auf ein Substrat aufgebracht werden.

Aus der DE 689 03 073 T2 ist ein dünner, korrisions- und hitzefester Film aus einer Aluminiumlegierung sowie ein Verfahren zu dessen Herstellung bekannt, wobei die Legierung als weitere Elemente Ni, Zr oder Y enthält und durch Dünnfilm-Bildungstechniken, wie Kathodenzerstäubung, Vakuumabscheidung oder lonenplattierung, auf ein Substrat, wie z.B. ein Draht oder ein Fillament, aufgebracht wird.

Die US 5,389,226 offenbart das galvanische Abscheiden einer amorphen, mikrokristallinen (einschließlich nanokristallinen) Ni-W-Legierung auf einem Substrat, wie einem Teil eines Verbrennungsmotors, wobei die Beschichtung eine große Härte aufweist und gegen Verschleiß und Korrossion widerstandsfähig ist.

Aus der JP 10096077 A ist eine Gradientenbeschichtung mit einer über 0,1 mm liegenden Dicke bekannt die aus einer AI-Legierung, einem Element aus der Gruppe Cr, Mn, Fe, Co, Ni, Cu, Ti, Zr und Y, Seltenerdmetallen sowie einem Mischmetall durch Elektronenstrahlabscheiden auf einem Substrat hergestellt wird, wobei die Härte der Beschichtung durch das Verhältnis zwischen A1 und dem Element aus der genannten Gruppe variiert wird.

Aus Chemical Abstracts XP 002136889 ist die Beschichtung eines eine erste, amorphe Schicht aus einer Ni-P-Legierung aufweisenden Kupferdrahts mit einer amorphen PdCu-Si-Legierung mittels Lasers bekannt, durch die elektrische Kontaktelemente widerstandsfähiger gegen Auflösen und Abtrag werden sollen.

Das der Erfindung zugrundeliegende Problem besteht darin, eine Verschleißschutzschicht der eingangs beschriebenen Gattung zu schaffen, welche mechanisch, z.B. durch Reibung, oder fluidisch beaufschlagte Oberflächen von Bauteilen gegen Verschleiß schützt und deren Lebensdauer erhöht. Es sollen dafür geeignete Legierungen bereitgestellt werden.

Die Lösung des Problems ist erfindungsgemäß dadurch gekennzeichnet, daß die Schicht aus einer Legierung auf Cu-Al-Ti (oder -Ta oder -Zr)- oder Pt-Al-Si- oder Ta-Si-N-Basis, wenigstens einem Seltenerdmetall und einem Übergangsmetall wie Cu oder Ni oder Co besteht.

Der Vorteil solcher Verschleißschutzschichten besteht darin, daß ihre Legierungen anders als herkömmliche kristalline Metalle durch ihre amorphe bzw. glasartige Struktur keine Komgrenzen aufweisen und so einerseits eine hohe Festigkeit gegen abrasiven oder erosiven Verschleiß und andererseits ein hohes elastisches Rückstellvermögen besitzen.

In einer nicht erfindungsgemäßen Ausgestaltung besteht die Schicht im wesentlichen aus einer Legierung auf Ni-W-Basis, wobei die Legierung Ni-reich sein kann und lediglich zwischen 20 und 40 Atom-% W enthalten kann. Zur Erzielung der amorphen oder amorph und nanokristallinen Metallstruktur kann die Legierung auf kostengünstige Weise galvanisch auf der Oberfläche des zu beschichtenden Bauteils abgeschieden werden. Eine solche als amorphes oder amorph-nanokristallines Metall vorliegende Legierung weist insbesondere aufgrund des Elements W eine große Härte auf und ist außerordentlich verschleißfest und temperaturbeständig.

In einer alternativen Ausgestaltung kann die Verschleißschutzschicht im wesentlichen aus einer Legierung auf Cu-Al-Ti (oder -Ta oder -Zr)- oder Pt-Al-Si- oder Ta-Si-N-Basis bestehen, wobei die Schicht mittels PVD-Verfahren (Physical Vapour Deposition) auf die Oberfläche des Bauteils aufgebracht sein kann und insbesondere Ta-Si-N für Anwendungen bei höheren Temperaturen geeignet ist.

Die Verschleißschutzschicht kann in einer nicht erfindungsgemäßen Ausführung im wesentlichen aus einer Legierung auf Zr-Ti-Basis bestehen, wobei die amorphe oder amorph und nano-kristalline Metallstruktur durch Aufbringen der Legierung aus der Schmelze hergestellt ist.

Alternativ kann die Verschleißschutzschicht in einer nicht erfindungsgemäßen Ausführung im wesentlichen aus einer Legierung auf Fe-Cr-B-Basis bestehen, wobei die Legierung bevorzugt eisenreich ist und etwa 70 Atom-% Fe enthält. Eine solche Verschleißschuztschicht kann z.B. durch thermische Spritzverfahren auf die Oberfläche des Bauteils aufgebracht sein.

In einer weiteren nicht erfindungsgemäßen Ausgestaltung kann die Verschleißschutzschicht im wesentlichen aus einer Legierung aus A1, wenigstens einem Seltenerdmetall und einem Übergangsmetall wie z.B. Cu oder Ni oder Co bestehen.

Bevorzugt ist die Schicht am Fuß einer Schaufel einer Gasturbine zum Schutz gegen Fretting aufgebracht, da dort während des Betriebs der Gasturbine ein hoher Reibverschleiß unter hochfrequenter Wechselbeanspruchung mit kleinen Amplituden auftritt.

In einer anderen Ausgestaltung kann die Verschleißschutzschicht auf einem im wesentlichen aus faserverstärkten Kunststoff (FVK) bestehenden Bauteil aufgebracht sein, um dieses gegen Erosion zu schützen. Bei FVK-Schaufeln für Verdichter von Gasturbinen sind als Erosionsschutz z.B. metallische Folien, Filze, Drahtgeflechte oder Lacke bekannt, die im Hinblick auf die Fertigungskosten oder die geforderte Lebensdauer nachteilig und noch nicht anwendbar sind.

Bei einem alternativen Ausführungsbeispiel kann die Verschleißschutzschicht auf einem als Scheibe oder Ring ausgebildeten Rotorträger bzw. -kranz eines integral beschaufelten FVK-Rotors einer Gasturbine als Schutz gegen abrasiven und/oder erosiven Verschleiß aufgebracht sein.

Bei einer alternativen Anwendung ist die Verschleißschutzschicht auf ein Bauteil eines Hubkolbenmotor, wie z.B. ein Ventil, eine Nockenwelle, eine Kurbelwelle, einen Kolbenring oder einen Kolbenbolzen aufgebracht.

Weiter Ausgestaltungen der Erfindung sind in den Unteransprüchen beschrieben.

Im folgenden wird die Erfindung anhand von Ausführungsbeispielen unter Bezugnahme auf eine Zeichnung näher erläutert. Es zeigt:
- Fig. 1: eine schematische Darstellung der Struktur eines amorphen Metalls,
- Fig. 2: eine schematische Darstellung auf die Struktur eines amorphen und nano- bzw. teilkristallinen Metalls,
- Fig. 3: eine schematische und perspektivische Ansicht einer FVK-Schaufel mit einem Ausführungsbeispiel der erfindungsgemäßen Verschleißschutzschicht,
- Fig. 4: eine schematische und perspektivische Ansicht einer metallischen Schaufel mit einem alternativen Ausführungsbeispiel der erfindungsgemäßen Verschleißschutzschicht und
- Fig. 5: eine schematische und perspektivische Ansicht eines FVK-Rotors mit einem weiteren alternativen Ausführungsbeispiel der erfindungsgemäßen Verschleißschutzschicht.

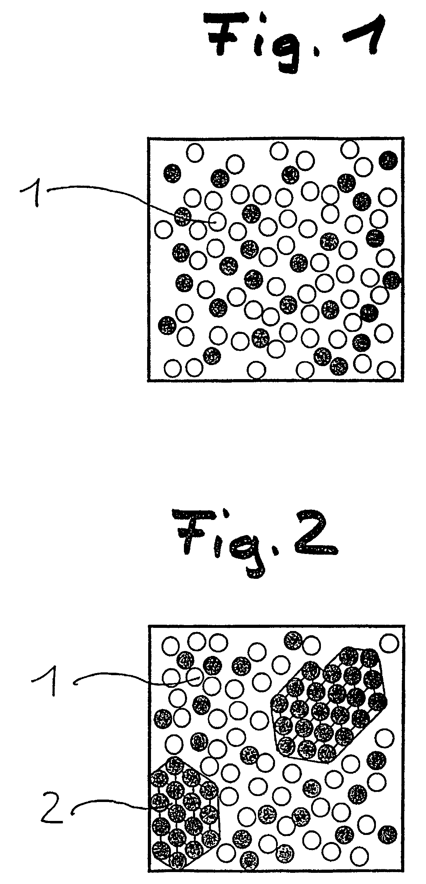

Fig. 1 zeigt schematisch die Gefügestruktur eines amorphen Metalls, bei dem die Elemente nicht, wie z.B. bei Ti, in einer festen, kristallinen Struktur angeordnet sind, sondern ohne regelmäßiges Kristallgitter ungeordnet vorliegen (Bereich 1). Die dadurch fehlenden Korngrenzen führen dazu, daß amorphe oder amorph und nanokristalline Metalle eine hohe Verschleißfestigkeit und Vickers-Härte aufweisen. Zudem tritt anders als bei den kristallinen Metallen bei einer Beanspruchung keine Versprödung und Kaltverfestigung auf.

Fig. 2 zeigt schematisch die Struktur eines amorphen und nano- bzw. teilkristallinen Metalls, bei dem die Elemente zum einen ungeordnet in einer amorphen Struktur (Bereich 1) und zum anderen kleinere Bereiche in einer kristallinen Struktur vorliegen (Bereich 2). Auch solche amorph- und nano- bzw. teilkristallinen Metalle weisen eine hohe Festigkeit gegen abrasiven oder erosiven Verschleiß auf und besitzen eine hohe Vickers-Härte.

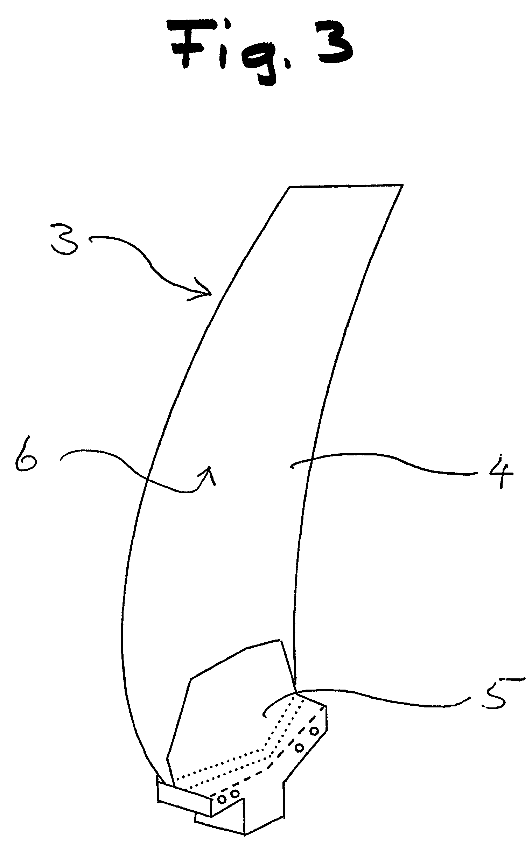

Fig. 3 zeigt eine schematische und perspektivische Ansicht einer im ganzen mit 3 bezeichneten Schaufel einer Gasturbine, bei der ein Schaufelblatt 4 aus faserverstärktem Kunststoff besteht und an einem metallischen, aus einer Ti-Basislegierung bestehenden Schaufelfuß 5 befestigt ist. Eine solche Schaufel 3 wird beispielsweise in einem Verdichter eingesetzt und mit ihrem Schaufelfuß 5 an einem Rotorkranz bzw. -träger lösbar oder auch mit einem geeigneten Schweißverfahren integral befestigt. Die Ausbildung des Schaufelblatts 4 aus faserverstärktem Kunststoff erweist sich im Hinblick auf die Gewichtsreduzierung als vorteilhaft. Nachteile bestehen jedoch in ihrem im allgemeinen unzureichenden Verschleißverhalten gegen Erosion. Aus diesem Grund wird das Schaufelblatt 4 aus faserverstärktem Kunststoff vollständig mit einer Verschleißschutzschicht 6 versehen, die im wesentlichen aus amorphen oder amorph- und nanokristallinen Metallen besteht.

Bei der vorliegenden Ausgestaltung wird eine im wesentlichen auf Ni-W-Basis bestehende Legierung ausgewählt, die Ni-reich ist und etwa 30 Atom-% W enthält Zur Ausbildung der amorphen bzw. amorph- und nanokristallin Struktur wird die Legierung durch galvanisches Abscheiden auf die Oberfläche des Schaufelblatts 4 aus kohlefaserverstärkten Kunststoff aufgebracht. Die mechanischen Eigenschaften sowie das Verschleißverhalten der Verschleißschutzschicht 6 läßt sich durch die Parameter Temperatur, Spannung sowie die Chemie des galvanischen Bads einstellen. Insbesondere die Härte der Verschleißschutzschicht 6 läßt sich zudem durch eine abschließende Wärmebehandlung bei Temperaturen zwischen etwa 100 °C und 500 °C erhöhen. Alternativ können auch lediglich einzelne Abschnitte der Schaufel 3, wie die Eintrittskante oder die Schaufelspitze mit der Verschleißschutzschicht 6 versehen sein. Diese könnte auch aus einer Legierung auf Cu-Al-Ti (oder -Ta oder -Zr)- oder Pd-Cu-Si- oder Pt-Al-Si- oder Ta-Si-N-Basis bestehen, da diese Legierungen insbesondere in Verbindung mit ihrer amorphen oder amorph-nanokristallinen Metallstruktur verschleißfest, hart und temperaturbeständig sind.

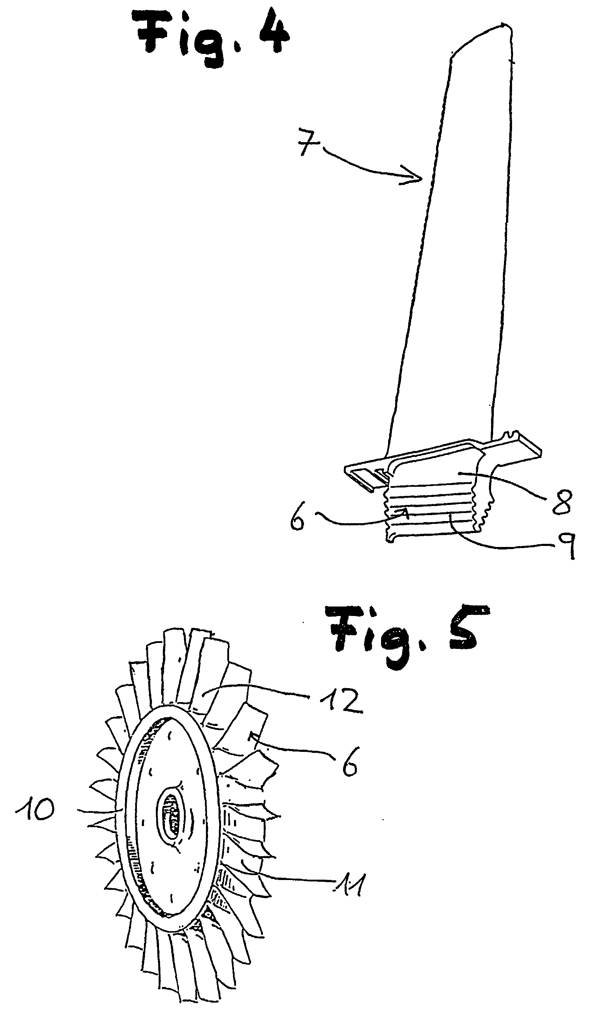

Fig. 4 zeigt eine metallische (Lauf-)Schaufel 7 eines Verdichters einer Gasturbine, die einen Schaufelfuß 8 mit einem Tannenbaumprofil 9 zur lösbaren Befestigung an einem Rotor aufweist. Die Schaufel ist aus Ti-Al pulvermetallurgisch hergestellt. Alternativ könnte die Verschfeißschutzschicht 6 auch auf gegossene oder geschmiedete Schaufeln oder andere Bauteile einer Gasturbine aufgebracht werden. Während des Betriebs der Gasturbine tritt am Schaufelfuß 8 der Schaufel 7 häufig sog. Fretting auf. Zur Vermeidung des dadurch verursachten Verschleißes und mithin zur Erhöhung der Lebensdauer ist die Schaufel 7 an ihrem Schaufelfuß 8 und insbesondere im Bereich des Tannenbaumprofils 9 mit einer im wesentlichen aus amorphen oder amorph-nanokristallinen Metallen bestehenden Verschleißschutzschicht 6 geschützt. Die Verschleißschutzschicht 6 besteht im wesentlichen aus einer Legierung auf Pd-Cu-Si-Basis und ist durch ein PVD-Verfahren auf die gegen Fretting zu schützende Oberfläche des Schaufelfußes 8 aufgebracht. Eine solche Verschleißschutzschicht 6 zeichnet sich neben den guten mechanischen Eigenschaften insbesondere auch durch eine gute Oxidationsbeständigkeit aus. Für Anwendungen bei höheren Temperaturen kann die Verschleißschutzschicht 6 alternativ aus einer Legierung auf Ta-Si-N-Basis bestehen.

Im vorliegenden Anwendungsfall gemäß Fig. 4 ist alternativ auch eine aus amorphen oder amorph-nanokristallinen Metallen bestehende Verschleißschutzschicht 6 aus einer Legierung auf Fe-Cr-B-Basis geeignet, die eisenreich ist und etwa 70 Atom-% Fe enthält. Die gewünschte, wenigstens bereichsweise amorphe Struktur dieser Legierung läßt sich beim Aufbringen durch thermisches Spritzen einstellen.

Fig. 5 zeigt einen integral beschaufelten Rotor 10 einer Gasturbine, an dessen Umfangsfläche 11 mehrere, im allgemeinen äquidistant angeordnete und sich im wesentlichen in Radialrichtung erstreckende Schaufeln 12 integral befestigt sind. Ein solcher Rotor 10 wird z.B. integral aus kohlefaserverstärktem Kunststoff hergestellt und weist ein schlechtes Verschleißverhalten auf. Zur Verbesserung des Widerstands gegen abrasiven und erosiven Verschleiß während des Betriebs wird der Rotor 10 mit einer Verschleißschutzschicht 6 aus einer Legierung auf Ni-W-Basis versehen, die Ni-reich ist, etwa 35 Atom-% W enthält und zur Ausbildung der amorphen bzw. amorph-nanokristallinen Struktur durch galvanisches Abscheiden auf der Oberfläche des Rotors 10 hergestellt ist.

Alternativ kann der Rotor 10 an den vorgenannten Bereichen mit einer Schicht 6 aus einer Legierung aus Al, wenigstens einem Seltenerdmetall und einem Übergangsmetall wie Cu, oder Ni oder Co beschichtet werden, da diese Legierungen in Verbindung mit ihrer amorphen oder amorph-nanokristallinen Metallstruktur verschleißfest und temperaturbeständig sind.

## Patentansprüche

1. Beschichtetes Bauteil mit einer Verschleißschutzschicht, die auf eine zu schützende Oberfläche des mechanisch und/oder strömungsmechanisch beanspruchten Bauteils aufgebracht ist und im wesentlichen aus amorphen oder amorph-nanokristallinen Metallen besteht, **dadurch gekennzeichnet, dass** die Schicht (6) aus einer Legierung auf Cu-Al-Ti- oder Cu-AI-Ta- oder Cu-Al-Zr- oder Pt-Al-Si- oder Ta-Si-N-Basis, wenigstens einem Seltenerdmetall und einem Übergangsmetall besteht.

2. Bauteil nach Anspruch 1, **dadurch gekennzeichnet, dass** das Übergangsmetall Cu oder Ni oder Co ist.

3. Bauteil nach einem oder mehreren der vorherigen Ansprüche, **dadurch gekennzeichnet, dass** die Schicht (6) durch galvanisches Abscheiden auf die Oberfläche des Bauteils aufgebracht ist.

4. Bauteil nach Anspruch 1 oder 2, **dadurch gekennzeichnet, dass** die Schicht (6) aus der Schmelze auf die Oberfläche des Bauteils aufgebracht ist.

5. Bauteil nach Ansprch 1 oder 2, **dadurch gekennzeichnet, dass** die Schicht (6) mittels PVD-Verfahren auf die Oberfläche des Bauteils aufgebracht ist.

6. Bauteil nach Anspruch 1 oder 2, **dadurch gekennzeichnet, dass** die Schicht (6) durch thermisches Spritzen auf die Oberfläche des Bauteils aufgebracht ist.

7. Bauteil nach einem oder mehreren der vorherigen Ansprüche, **gekennzeichnet durch** eine Ausführung als Bauteil einer Verbrennungskraftmaschine.

8. Bauteil nach einem oder mehreren der vorherigen Ansprüche, **gekennzeichnet durch** eine Ausführung als gas- oder heißgasumströmtes Bauteil einer Gasturbine.

9. Bauteil nach einem oder mehreren der vorherigen Ansprüche, **gekennzeichnet durch** eine Ausführung als Schaufel (7) einer Gasturbine, an deren Fuß (8,9) die Schicht (6) zum Schutz gegen Fretting aufgebracht ist.

10. Bauteil nach einem oder mehreren der vorherigen Ansprüche, **dadurch gekennzeichnet, dass** das Bauteil im wesentlichen aus faserverstärktem Kunststoff (FVK) besteht.

11. Bauteil nach einem oder mehreren der vorherigen Ansprüche, **gekennzeichnet durch** eine Ausführung als FVK-Schaufel (3,12) und/oder einem als Scheibe oder Ring ausgebildeten Träger eines integral beschaufelten FVK-Rotors (10), auf die/den die Schicht (6) zum Schutz gegen Erosion und/oder Korrosion aufgebracht ist.

12. Bauteil nach einem oder mehreren der Ansprüche 1 bis 9, **gekennzeichnet durch** eine metallische Ausführung.

13. Bauteil nach Anspruch 12, **gekennzeichnet durch** eine Ausführung aus einer Legierung auf Ti- oder Ni- oder Co- oder Fe-Basis.

14. Bauteil nach einem oder mehreren der Ansprüche 1 bis 6, **gekennzeichnet durch** eine Ausführung als Radreifen eines Schienenfahrzeugs, auf dem die Schicht (6) aufgebracht ist.

15. Bauteil nach einem oder mehreren der Ansprüche 1 bis 7, **gekennzeichnet durch** eine Ausführung als Bauteil eines Hubkolbenmotors, wie ein Ventil, eine Nockenwelle, eine Kurbelwelle, einen Kolbenring oder einen Kolbenbolzen, auf das die Schicht (6) aufgebracht ist.

## Claims

1. Component coated with a protective anti-wear coating, which is applied to a surface to be protected that is exposed to mechanical stress and/or fluid mechanical stress, essentially consisting of amorphous or amorphous-nano-crystalline metals, **characterised in that** the coating (6) is an alloy with a base of Cu-Al-Ti or Cu-Al-Ta or Cu-Al-Zr or Pt-Al-Si or Ta-Si-N, at least one rare earth metal and a transition metal.

2. Component as claimed in claim 1, **characterised in that** the transition metal is Cu or Ni or Co.

3. Component as claimed in one or more of the preceding claims, **characterised in that** the coating (6) is applied to the surface of the component by galvanic deposition.

4. Component as claimed in claim 1 or 2, **characterised in that** the coating (6) is applied to the surface of the component from the melt.

5. Component as claimed in claim 1 or 2, **characterised in that** the coating (6) is applied to the surface of the component by means of a PVD process.

6. Component as claimed in claim 1 or 2, **characterised in that** the coating (6) is applied to the surface of the component by thermal spraying.

7. Component as claimed in one or more of the preceding claims, **characterised by** use as a component of an internal combustion engine.

8. Component as claimed in one or more of the preceding claims, **characterised by** use as a component in a gas turbine through which gas or hot gas is circulated.

9. Component as claimed in one or more of the preceding claims, **characterised by** use as a blade (7) of a gas turbine, to the foot (8, 9) of which the coating (6) is applied in order to protect against fretting.

10. Component as claimed in one or more of the preceding claims, **characterised in that** the component is essentially made from fibre-reinforced plastics material.

11. Component as claimed in one or more of the preceding claims, **characterised by** use as a blade (3, 12) of fibre-reinforced plastics and/or a bearing in the form of a plate or disc for a fibre-reinforced plastics rotor (10) with integral blades, to which the coating (6) is applied in order to protect against erosion and/or corrosion.

12. Component as claimed in one or more of claims 1 to 9, **characterised by** the use of metals.

13. Component as claimed in claim 12, **characterised by** use of an alloy with a base of Ti or Ni or Co or Fe.

14. Component as claimed in one or more of claims 1 to 6, **characterised by** use as wheel rims of a track-bound vehicle, to which the coating (6) is applied.

15. Component as claimed in one or more of claims 1 to 7, **characterised by** use as a component of a reciprocating piston engine, such as a valve, a camshaft, a crankshaft, a piston ring or a piston gudgeon, to which the coating (6) is applied.

## Revendications

1. composant recouvert comportant une couche anal-usure, qui est disposée sur une surface à protéger du composant soumis à des sollicitations mécaniques et/ou à des sollicitations mécaniques d'écoulement, et est constituée essentiellement par des métaux amorphes ou nanocristallins amorphes, **caractérisé en ce que** la couche (6) est formée par un alliage à base de Cu-Al-Ti ou à base de Cu-Al-Ta ou à base de Cu-Al-Zr ou à base de Pt-Al-Si ou à base de Ta-Si-N, par au moins un métal de terre rare et par un métal transitoire.

2. Composant selon la revendication 1, **caractérisé en ce que** le métal transitoire est du Cu ou du Ni ou du Co.

3. Composant selon une ou plusieurs des revendications précédentes, **caractérisé en ce que** la couche (6) est déposée au moyen d'un dépôt galvanique sur la surface du composant.

4. Composant selon la revendication 1 ou 2, **caractérisé en ce que** la couche (6) est déposée à partir de la masse fondue sur la surface du composant.

5. Composant selon la revendication 1 ou 2, **caractérisé en ce que** la couche (6) est déposée à l'aide du procédé PVD sur la surface du composant.

6. Composant selon la revendication 1 ou 2, **caractérisé en ce que** la couche (6) est déposée par projection thermique sur la surface du composant.

7. Composant selon une ou plusieurs des revendications précédentes, **caractérisé par** un agencement en tant que composant d'un moteur à combustion interne.

8. Composant selon une ou plusieurs des revendications précédentes, **caractérisé par** une réalisation en tant que composant d'une turbine à gaz, autour duquel circulent des gaz ou des gaz chauds.

9. Composant selon une ou plusieurs des revendications précédentes, **caractérisé par** une réalisation en tant qu'aube (7) d'une turbine à gaz, sur le pied (8, 9) de laquelle la couche (6) est déposée pour réaliser une protection vis-à-vis d'une érosion.

10. Composant selon une ou plusieurs des revendications précédentes, **caractérisé en ce que** le composant est constitué essentiellement par une matière plastique renforcée par des fibres (FVK).

11. Composant selon une ou plusieurs des revendications précédentes, **caractérisé par** une réalisation en tant qu'aube FVK (3, 12) et par un support agencé sous la forme d'un disque ou d'une bague, d'un rotor FVK (10) garni intégralement, d'aubes, support sur lequel la couche (6) est déposée pour réaliser une protection vis-à-vis de l'érosion et/ou de la corrosion.

12. Composant selon une ou plusieurs des revendications 1 à 9, **caractérisé par** une réalisation métallique.

13. Composant selon la revendication 12, **caractérisé par** une réalisation formée d'un alliage à base de Ti ou à base de Ni ou à base de Co ou à base de Fe.

14. Composant selon une ou plusieurs des revendications 1 à 6, **caractérisé par** une réalisation sous la forme d'un pneumatique de roue d'un véhicule sur rail, sur lequel la couche (6) est disposée.

15. Composant selon une ou plusieurs des revendications 1 à 7, **caractérisé par** une réalisation en tant que composant d'un moteur à piston alternatif, tel qu'une soupape, un arbre à cames, un vilebrequin, un segment de piston ou un axe de piston, sur lequel la couche (6) est disposée.
